# EUROPEAN PATENT APPLICATION

(11) **EP 2 434 381 A1**
(43) Date of publication of application: **28.03.2012**
(21) Application number: 10835480.4
(22) Date of filing: 08.12.2010
(51) Int. Cl.: G06F 3/048

(54) **METHOD AND DEVICE FOR DISPLAYING INTERFACE**

(30) Priority: 11.12.2009 CN 200910241787
(71) Applicant: Huawei Device Co., Ltd., Longgang District Shenzhen Guangdong 518129 (CN)
(72) Inventor: ZHENG, Dandan, Guangdong 518129 (CN)
(74) Representative: Barth, Stephan Manuel
(86) International application number: PCT/CN2010/079543
(87) International publication number: WO 2011/069445

(57) **Abstract**

The present invention relates to a method and an apparatus for displaying an interface. The method includes: obtaining display information of a current display screen; determining, according to the display information, position information of a picture to be displayed on the current display screen, and arranging the picture to be displayed at a position corresponding to the position information on the current display screen, so as to finish arranging the picture to be displayed on the current display screen. Implementation of embodiments of the present invention may effectively enable a user to set the display position, display mode, and occupied display space of a picture to be displayed according to personal preferences, so that the picture desired by the user can be displayed on the current display screen, thereby facilitating the application of the user.

## Description

This application claims priority to Chinese Patent Application No. 200910241787.X, filed with the Chinese Patent Office on December 11, 2009 and entitled "METHOD AND APPARATUS FOR DISPLAYING INTERFACE", the contents of which are all incorporated herein by reference in their entireties.

### FIELD OF THE INVENTION

The present invention relates to the field of communication technologies, and in particular, to a method and an apparatus for displaying an interface.

### BACKGROUND OF THE INVENTION

With the development of science and technology, a handheld electronic device can carry more and more contents, and especially applications of technologies such as widget (widget is a JavaScript-based application platform, and formed by a Widget engine and Widget tools; various Widget tools can be used only after the Widget engine is installed) enrich the contents to be displayed on the standby interface, that is, it is required to set more and more pictures to be displayed on the standby interface. Generally, the layout of various pictures displayed on the existing standby interface is set fixedly.

In the implementation of the present invention, the prior art has at least the following technical problems:

Due to the setting of the existing standby interface, a user cannot flexibly set pictures to be displayed on the standby interface according to requirements, for example, when it is required to add a new picture to be displayed on the standby interface, the setting of the existing standby interface in the prior art cannot meet this requirement.

### SUMMARY OF THE INVENTION

Embodiments of the present invention provide a method and an apparatus for displaying an interface, so that a user may flexibly set different pictures to be displayed on the standby interface.

A method for displaying an interface includes:
obtaining display information of a current display screen; and
determining, according to the display information, position information of a picture to be displayed on the current display screen, and arranging the picture to be displayed at a position corresponding to the position information on the current display screen.

An apparatus for displaying an interface includes:
a display information obtaining unit, configured to obtain display information of a current display screen; and
a display processing unit, configured to determine, according to the display information obtained by the display information obtaining unit, position information of a picture to be displayed on the current display screen, and arrange the picture to be displayed at a position corresponding to the position information on the current display screen.

It can be seen from the technical solution provided in the present invention that, the technical solution may effectively solve the problem that the standby interface cannot be set flexibly in the prior art, and enable the user to set a desired picture to be displayed on the standby interface at will according to requirements, so that the picture desired by the user can be displayed on the current display screen.

### BRIEF DESCRIPTION OF THE DRAWINGS

To make the technical solutions in the embodiments of the present invention or in the prior art clearer, the accompanying drawings for describing the embodiments or the prior art are introduced briefly in the following. Apparently, the accompanying drawings in the following description are only some embodiments of the present invention, and persons of ordinary skill in the art may derive other drawings according to these drawings without creative efforts.
FIG. 1 is a first schematic processing flow chart of a method for displaying an interface according to an embodiment of the present invention;
FIG. 2 is a second schematic processing flow chart of a method for displaying an interface according to an embodiment of the present invention;
FIG. 3 is a first schematic structure diagram of an apparatus for displaying an interface according to an embodiment of the present invention;
FIG. 4 is a second schematic structure diagram of an apparatus for displaying an interface according to an embodiment of the present invention; and
FIG. 5 is a third schematic structure diagram of an apparatus for displaying an interface according to an embodiment of the present invention.

### DETAILED DESCRIPTION OF THE EMBODIMENTS

The technical solutions in the embodiments of the present invention are clearly and completely described in the following with reference to the accompanying drawings. Apparently, the embodiments to be described are only a part rather than all of the embodiments of the present invention. All other embodiments obtained by persons of ordinary skill in the art based on the embodiments of the present invention without creative efforts shall fall within the protection scope of the present invention.

The embodiments of the present invention are described in further detail in the following with reference to the accompanying drawings.

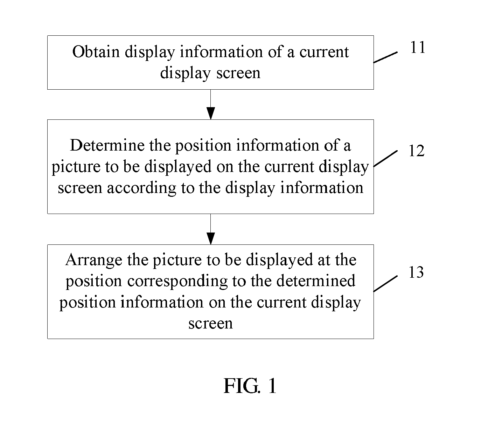

As shown in FIG. 1, a specific implementation process of the method for displaying an interface according to an embodiment of the present invention may include the following steps.

Step 11: Obtain display information of a current display screen.

For example, the display information may include the display information of a displayed picture and information about a vacant position of the display screen.

Step 12: Determine position information of a picture to be displayed on the current display screen according to the display information.

For example, the position information may include information such as the occupied position and size of the picture to be displayed on the standby interface.

Specifically, according to the display information, the picture to be displayed may be dragged on the current screen to the boundary between other displayed pictures, and the picture stays for a set time, so as to extend along the boundary to obtain the position information of the picture to be displayed; or, according to the display information, the position information of the picture to be displayed may be determined at a vacant position on the current display screen. Definitely, in the embodiment of the present invention, the methods for determining the position information of the picture to be displayed include but are not limited to the foregoing methods.

Step 13: Arrange the picture to be displayed at the position corresponding to the position information determined on the current display screen to finish arranging the picture to be displayed on the current display screen.

To facilitate the understanding of the embodiments of the present invention, a specific implementation process of the embodiments of the present invention is described in the following with reference to the accompanying drawings.

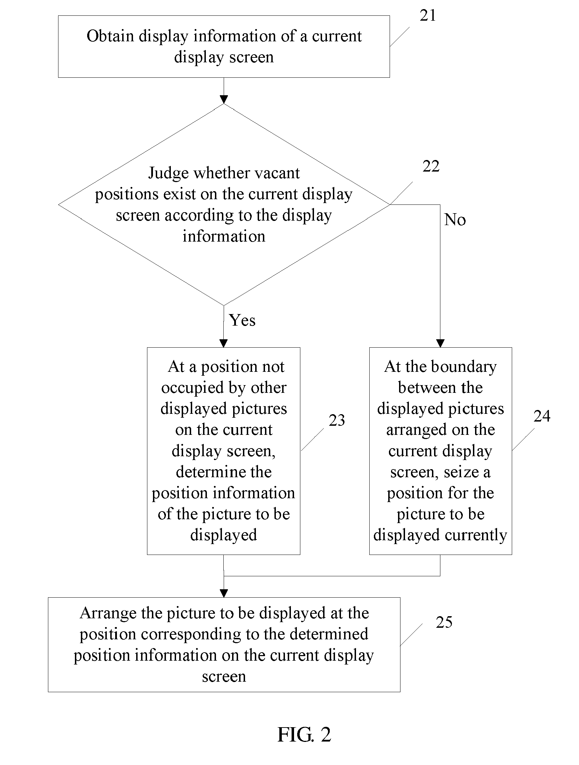

As shown in FIG. 2, the specific implementation process of a method for displaying an interface provided in an embodiment of the present invention includes:
Step 21: Obtain display information of a current display screen.
Step 22: Judge whether information about a vacant position exists on the current display screen according to the display information, that is, judge whether a position not occupied by one or more other displayed pictures exists on the current display screen; if the information about a vacant position exists, perform step 23; if no information about a vacant position exists, perform step 24.
Step 23: At a position not occupied by one or more other displayed pictures on the current display screen, determine the position information of the picture to be displayed, and perform step 25.

Specifically, if the position not occupied by one or more other displayed pictures is enough to arrange the picture to be displayed, the position information of the picture to be displayed currently may be determined directly at the position not occupied by one or more other displayed pictures; if the position not occupied by one or more other displayed pictures is not enough to arrange the picture to be displayed, a part of the position occupied by one or more other displayed pictures may be seized on the current display screen, that is, one or more other displayed pictures may be pushed out of the current display screen through a corresponding seizure operation to ensure that the picture to be displayed currently may obtain an enough display position on the current display screen.

Specifically, in the process of determining the position information of the picture to be displayed currently at the position not occupied by one or more other displayed pictures and obtaining position information of the seized position, position seizure may be implemented by dragging the picture to be displayed; in the process of dragging the picture to be displayed to extend and obtain position information, extensions may be performed in a unit, such as screen size, size of the picture to be displayed, or part of the size of the picture to be displayed, so as to obtain the position information of the picture to be displayed.

Further, for example, if a vacant position of 4x4 square units exists on the current display screen of a smart phone, and the size of the picture to be displayed is 5x6 square units, in the process of arranging the picture to be displayed, on the basis of the vacant position of 4x4 square units, a display area of 5x6 square units for the picture to be displayed is extended in any direction (such as upward, downward, leftward, or rightward, or any combination thereof) as the position information of the picture to be displayed; in addition, in the extending process, display positions of one or more other displayed pictures are changed, that is, one or more other displayed pictures are pushed out, for example, one or more other displayed pictures at the seized position may be pushed to move toward other directions to set aside a position of the size of the picture to be displayed, or, move toward other directions to set aside a position of a screen.

Step 24: At the boundary between the displayed pictures that are already arranged on the current display screen, seize a position for the picture to be displayed currently, and perform step 25.

Specifically, in a process of performing a seizure operation, the picture to be displayed may be dragged to the boundary between the displayed pictures that are already arranged, and stay for a preset time at the boundary to seize a corresponding position.

Further, for example, assuming that no vacant position exists on the current display screen of a smart phone, if the terminal user moves a "Phone Book" icon (namely, a picture to be displayed) to the boundary between other displayed pictures and lets the icon stay for 0.5s, which exceeds the preset time 0.3s, the "Phone Book" icon may automatically extend the corresponding display area (such as a line or a page) along the boundary, so that the "Phone Book" icon is displayed at the corresponding position of the current display screen, and the pictures originally displayed are pushed to other positions of the current standby interface. If the pictures originally displayed are pushed to other positions of the current standby interface outside the current display screen, the pictures originally displayed will not be displayed on the current display screen.

Step 25: Arrange the picture to be displayed at the position corresponding to the determined position information on the current display screen.

Specifically, in the process of arranging the picture to be displayed at the corresponding position on the current display screen, the position corresponding to the position information on the current display screen is vacated first, and then the picture to be displayed is arranged at the vacant position; or the picture to be displayed is directly arranged at the position corresponding to the position information, so that the picture to be displayed is arranged by pushing and seizing the position corresponding to the position information in the arrangement process.

The shape of the current standby interface after the picture to be displayed is arranged may be in a regular graph shape (for example, rectangular), or may be in other irregular graph shapes; accordingly, the current standby interface may be dragged to move under the instruction entered by the user, so that pictures in different areas are displayed on the current standby interface on the current display screen, that is, the current display screen may display pictures at a part of the positions on the current standby interface.

It should be noted that, in the foregoing process, the processing performed by step 23 may also be replaced by the processing performed by step 24. Specifically, if a vacant position exists on the current display screen, step 23 or step 24 may be performed according to the preset selection, or step 23 or step 24 may be performed according to the selection of the terminal user.

With the implementation of the embodiment of the present invention, a user may set a picture to be displayed on the standby interface of a terminal at will, and may set the display position, display mode, and occupied display space of the picture according to personal preferences, so that the picture to be displayed is not limited by the shape and size of the standby interface any more. Therefore, the display pattern of the standby interface is defined by the user completely, which facilitates the application of the user, so that the picture desired by the user can be set and displayed on the current display screen conveniently and flexibly.

It may be understood by persons of ordinary skill in the art that, all or part of the steps of the methods according to the embodiments of the present invention may be implemented by a program instructing relevant hardware. The program may be stored in a computer readable storage medium. When the program is run, the steps of the method according to the embodiments of the present invention are performed. The storage medium may be any medium capable of storing program codes, such as a ROM, a RAM, a magnetic disk, or an optical disk.

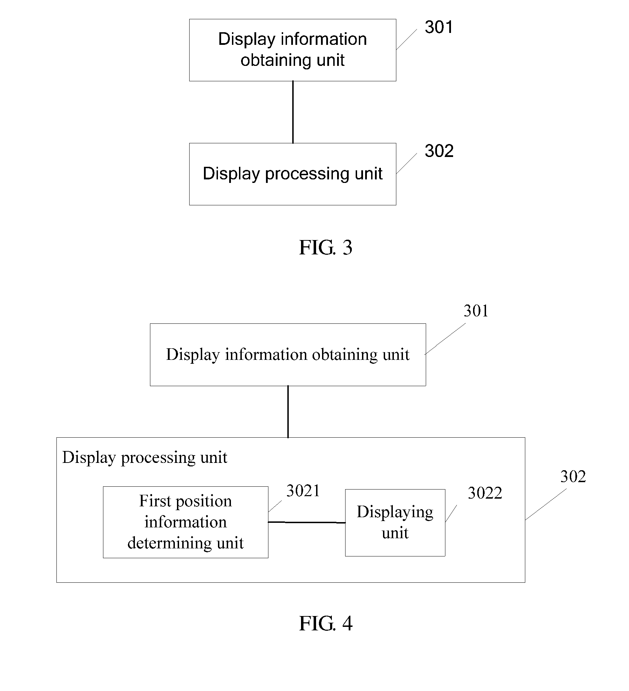

An embodiment of the present invention further provides an apparatus for displaying an interface, the specific structure of which is as shown in FIG. 3 and may specifically include:
a display information obtaining unit 301, configured to obtain display information of a current display screen; and
a display processing unit 302, configured to determine, according to the display information obtained by the display information obtaining unit 301, position information of a picture to be displayed on the current display screen, and arrange the picture to be displayed at a position corresponding to the position information on the current display screen.

Further, as shown in FIG. 4, the display processing unit 302 may specifically include:
a first position information determining unit 3021, configured to: according to the display information obtained by the display information obtaining unit 301, drag the picture to be displayed to the boundary between other displayed pictures and let the picture stay for a set time to extend along the boundary to obtain the position information of the picture to be displayed, that is, extend (seize a position) based on the corresponding boundary to obtain the position information of the picture to be displayed; and
a displaying unit 3022, configured to arrange the picture to be displayed at the position corresponding to the determined position information on the current display screen.

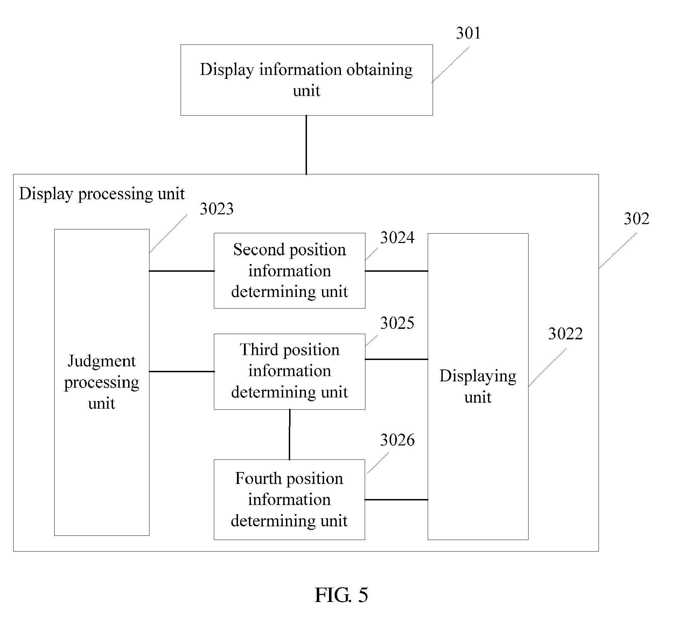

Specifically, as shown in FIG. 5, the display processing unit 302 may specifically include:
a judgment processing unit 3023, configured to judge, according to the display information obtained by the display information obtaining unit 301, whether a vacant position exists on the current display screen;
a second position information determining unit 3024, configured to: when the judgment processing unit 3023 determines that no vacant position exists on the current display screen, drag the picture to be displayed to the boundary between other displayed pictures and let the picture stay for the set time, so as to extend along the boundary to obtain the position information of the picture to be displayed;
a third position information determining unit 3025, configured to, when the judgment processing unit determines that a vacant position exists on the current display screen, determine the position information of the picture to be displayed at the vacant position on the current display screen; and
a displaying unit 3022, configured to arrange the picture to be displayed at the position corresponding to the position information on the current display screen.

Still referring to FIG. 5, the apparatus may further include a fourth position information determining unit 3026 corresponding to the third position information determining unit 3025. The fourth position information determining unit 3026 is configured to extend, in the set direction based on the vacant position, a display area enough to display the picture to be displayed when the vacant position on the current display screen is not enough to arrange the picture to be displayed, so as to determine the position information of the picture to be displayed.

To sum up, with the implementation of the apparatus embodiment, a terminal user may set a desired picture to be displayed on the standby interface of a terminal at will, and set the display position, display mode, and occupied display space of the picture according to personal preferences, so that the picture desired by the user can be displayed on the current display screen, thereby facilitating the application of the user.

It may be understood by persons of ordinary skill in the art that, all or part of the steps of the methods according to the embodiments of the present invention may be implemented by a program instructing relevant hardware. The program may be stored in a computer readable storage medium, and the storage medium includes: a ROM, a RAM, a magnetic disk, or an optical disk.

A method, an apparatus, and a communication system for checking terminal validity according to the embodiments of the present invention are described in detail above. Specific cases are used for illustrating principles and implementations of the present invention. The above descriptions of the embodiments are merely for understanding the method and core ideas of the present invention. Meanwhile, persons of ordinary skill in the art may make modifications to the specific implementations and application ranges according to the idea of the present invention. To sum up, the content of the specification shall not be regarded as a limitation to the present invention.

## Claims

1. A method for displaying an interface, comprising:
obtaining display information of a current display screen;
determining, according to the display information, position information of a picture to be displayed on the current display screen, and
arranging the picture to be displayed at a position corresponding to the position information on the current display screen.

2. The method according to claim 1, wherein the step of determining position information of the picture to be displayed on the current display screen comprises:
according to the display information, dragging the picture to be displayed to a boundary between other displayed pictures and letting the picture stay for a set time, so as to extend along the boundary to obtain the position information of the picture to be displayed.

3. The method according to claim 1, wherein the step of determining position information of the picture to be displayed on the current display screen comprises:
judging, according to the display information, whether a vacant position exists on the current display screen;
if no vacant position exists, dragging the picture to be displayed to a boundary between other displayed pictures and letting the picture stay for a set time, so as to extend along the boundary to obtain the position information of the picture to be displayed; or
if a vacant position exists, determining the position information of the picture at the vacant position.

4. The method according to claim 3, wherein if the existent vacant position on the current display screen is not enough to arrange the picture to be displayed, the method further comprises:
extending, in a set direction based on the vacant position, a display area enough to display the picture to be displayed, so as to determine the position information of the picture to be displayed.

5. An apparatus for displaying an interface, comprising:
a display information obtaining unit, configured to obtain display information of a current display screen; and
a display processing unit, configured to determine, according to the display information obtained by the display information obtaining unit, position information of a picture to be displayed on the current display screen, and arrange the picture to be displayed at a position corresponding to the position information on the current display screen.

6. The apparatus according to claim 5, wherein the display processing unit comprises:
a first position information determining unit, configured to drag the picture to be displayed to a boundary between other displayed pictures and let the picture stay for a set time, so as to extend along the boundary to obtain position information of the picture to be displayed; and
a displaying unit, configured to arrange the picture to be displayed at the position corresponding to the position information on the current display screen.

7. The apparatus according to claim 5, wherein the display processing unit comprises:
a judgment processing unit, configured to judge, according to the display information obtained by the display information obtaining unit, whether a vacant position exists on the current display screen;
a second position information determining unit, configured to: when the judgment processing unit determines that no vacant position exists on the current display screen, drag the picture to be displayed to a boundary between other displayed pictures and let the picture stay for a set time, so as to extend along the boundary to obtain the position information of the picture to be displayed;
a third position information determining unit, configured to determine the position information of the picture to be displayed at the vacant position on the current display screen when the judgment processing unit determines that a vacant position exists on the current display screen; and
a displaying unit, configured to arrange the picture to be displayed at the position corresponding to the position information on the current display screen.

8. The apparatus according to claim 7, wherein the apparatus further comprises:
a fourth position information determining unit, configured to extend, in a set direction based on the vacant position, a display area enough to display the picture to be displayed when the vacant position on the current display screen is not enough to arrange the picture to be displayed, so as to determine the position information of the picture to be displayed.
